# EUROPÄISCHE PATENTSCHRIFT

(11) **EP 1 064 151 B1**
(45) Veröffentlichungstag und Bekanntmachung des Hinweises auf die Patenterteilung: **25.05.2005**
(21) Anmeldenummer: 99916863.6
(22) Anmeldetag: 22.03.1999
(51) Int. Cl.: B32B 31/00, B32B 15/08

(54) **Verfahren zur Herstellung eines METALLVERBUNDMATERIALs**
Production of METALLIC COMPOSITE MATERIAL
PROCEDE DE Fabrication d'un MATERIAU COMPOSITE METALLIQUE

(30) Priorität: 20.03.1998 DE 19812302
(43) Veröffentlichungstag der Anmeldung: 03.01.2001
(73) Patentinhaber: ALCAN INTERNATIONAL LIMITED, Montreal Quebec H3A 3G2 (CA)
(72) Erfinder: BRICKENKAMP, Wolfgang, D-58515 Lüdenscheid (DE); MEYKRANZ, Friedhelm, D-58515 Lüdenscheid (DE); SAURE, Gerhard, D-57430 Attendorn (DE)
(74) Vertreter: HOFFMANN - EITLE
(86) Internationale Anmeldenummer: PCT/EP1999/001924
(87) Internationale Veröffentlichungsnummer: WO 1999/048686

(56) Entgegenhaltungen:
- EP-A- 0 407 313
- GB-A- 2 027 391
- DATABASE WPI Section Ch, Week 8651 Derwent Publications Ltd., London, GB; Class A18, AN 86-336111 XP002106876 & JP 61 252136 A (MITSUBISHI CHEM IND LTD) , 10. November 1986
- DATABASE WPI Section Ch, Week 8337 Derwent Publications Ltd., London, GB; Class A17, AN 83-762053 XP002106886 & JP 58 132551 A (DAINIPPON PRINTING CO LTD), 6. August 1983
- DATABASE WPI Section Ch, Week 8348 Derwent Publications Ltd., London, GB; Class A17, AN 83-833294 XP002106877 & ZA 8 207 417 A (TOYO SEIKAN KAISHA LTD) , 7. Juli 1983
- DATABASE WPI Section Ch, Week 8133 Derwent Publications Ltd., London, GB; Class A17, AN 81-59802D XP002106878 & JP 56 080456 A (TOYO ALUMINIUM KK) , 1. Juli 1981

## Beschreibung

Die vorliegende Erfindung betrifft ein Verfahren zur Herstellung eines Metallverbundmaterials aus einem Metallband und darauf durch Extrusion bzw. Coextrusion aufgebrachten Kunststoffschichten sowie die Verwendung des so herstellbaren Verbundmaterials zur Herstellung von Hohlkörpern durch ein Tiefzieh- oder Abstreckziehverfahren.

Es ist bekannt, Metallverbundmaterialien aus Metallband, -folie oder -blech und darauf einseitig oder beidseitig aufgebrachten Kunststoffschichten zur Herstellung von Hohlkörpern, z.B. Behältern, durch ein Tiefzieh- oder Abstreckziehverfahren zu verwenden.

GB-A-2 003 415 offenbart ein Verfahren zum Tiefziehen und Abstreckziehen von dünnwandigen, tiefen Behältern aus einem Verbundmaterial, das aus einem Metallblech, z.B. Aluminium, besteht, das auf wenigstens einer Seite über eine Klebstoffharzschicht mit einer Kunststoffschicht laminiert ist. Dadurch soll verhindert werden, daß bei der Verarbeitung zu Behältern die Kunststoffschicht zerstört und das Metallblech freigelegt wird.

EP-A-0 407 313 beschreibt ein Verfahren zur Herstellung eines Mehrschichtmaterials, das für die Herstellung von tieferen Behältern als in GB-A-2 003 415 durch Tiefziehen oder Abstreckziehen geeignet ist. Das Mehrschichtmaterial umfaßt ein oberflächenbehandeltes Substrat aus Aluminiumlegierung, das auf der einen Seite mit einem Kunststoff und auf der anderen Seite mit einer Lackschicht überzogen ist. Um ohne Zerstörung des Überzugs Hohlkörper mit einem größeren Höhenzu Durchmesserverhältnis herstellen zu können, enthält die Lackschicht zusätzlich einen festen, teilchenförmigen Schmierstoff, der härter als der Lack selbst und weicher als das zum Abstreckziehen verwendete Werkzeug ist.

DE-A-195 29 583 und EP-B-0 690 785 offenbaren Verfahren zum Beschichten von Metallbahnen, indem eine Kunststoffolie auf die Metallbahn auflaminiert und zusammen mit der Metallbahn in einem nachfolgenden Schritt zur Verbesserung der Adhäsion erwärmt wird, so daß die Kunststoffolie plastisch formbar wird.

JP-A-61 252136 beschreibt die Herstellung einer laminierten Folie durch Extrusionsbeschichtung eines Substrats mit einem Polyolefinharz und anschließende Wärmebehandlung zur Verbesserung der Oberflächeneigenschaften.

JP-A-58 132551 betrifft ein Verfahren zur Laminatherstellung, in dem eine zweischichtige Folie aus Polyolefin und modifiziertem Polyolefin hergestellt, anschließend mit einer Substratoberfläche aus Aluminium in Kontakt gebracht wird und auf eine Temperatur oberhalb des Schmelzpunktes des modifizierten Polyolefins erwärmt wird.

GB-A-2 027 391 beschreibt eine sterilisierbare laminierte Struktur und ein Verfahren zu ihrer Herstellung, wobei eine Kunststofffolie durch Kaschieren auf eine laminierte Aluminiumbahn aus Aluminiumfolie, Haftvermittler und Kunststofffolie aufgebracht wird.

ZA-A-8 207 417 beschreibt ein Laminat aus Metallfolie und Kunststoffschicht, das durch heißverkleben hergestellt wird.

JP-A-56 080456 betrifft eine Aluminiumverbundfolie aus Aluminiumfolie und einer Kunststoffschicht aus Polypropylen, Pfropfmonomer und Radikalstarter.

Hohlkörper aus tiefgezogenen Metallverbundmaterialien zur Verwendung als Behälter können nach dem Füllen sterilisiert werden, indem sie bei Temperaturen von etwa 120-135 °C für etwa 30-34 Minuten erhitzt werden. Im Gegensatz zu den durch Laminieren bzw. Kaschieren hergestellten, herkömmlichen Verbundmaterialien ist bei Einsatz einer Extrusionsbeschichtung die Haftung der Kunststoffschichten auf dem Metall, insbesondere auf nicht vorbehandeltem Metall, selbst bei zusätzlicher Verwendung von Haftvermittelern nicht ausreichend, um das resultierende Verbundmaterial sowohl tiefziehbar als auch sterilisierbeständig zu machen.

Ein Problem der vorliegenden Erfindung besteht deshalb darin, ein Verfahren zur Herstellung eines Metallverbundmaterials durch Extrusionsbeschichtung zur Verfügung zu stellen, wobei das resultierende Metallverbundmaterial ohne Auftreten einer Auftrennung des Verbundes tiefzieh- und sterilisierbar ist.

Es wurde überraschend gefunden, daß dieses Problem durch ein Verfahren gelöst werden kann, worin ein Metallband mit einer modifizierten Kunststoffschicht auf Basis von modifiziertem Polypropylen durch Extrusion ein- oder zweiseitig beschichtet und das resultierende Metallverbundmaterial anschließend für eine Dauer von 1 bis 10 Sekunden, besonders bevorzugt 1 bis 3 Sekunden und besonders bevorzugt 1 bis 2 Sekunden auf eine Temperatur oberhalb des Schmelzpunktes der modifizierten Kunststoffschicht erwärmt wird.

Die verbesserte Haftung zwischen Metallband und Beschichtung bei Verwendung der erfindungsgemäßen Kombination aus Extrusionsbeschichtung und Wärmebehandlung ist u.a. deshalb so überraschend, weil im Extrusionsschritt das extrudierte Material im schmelzflüssigen Zustand auf den Träger aufgebracht wird. Eine Verbesserung der Haftung auf dem Träger durch eine anschließende Wärmebehandlung, in der die Beschichtung erneut in den schmelzflüssigen Zustand überführt wird, wurde deshalb vor dem Hintergrund des Standes der Technik nicht erwartet.

Die Extrusionsbeschichtung erfolgt auf einem Metallband von Raumtemperatur. Auf diese Weise geht das extrudierte Material nach der Beschichtung und vor dem sich anschließenden Wärmebehandlungsschritt vorübergehend in den festen Zustand über. Die Erwärmung im Wärmebehandlungsschritt kann durch herkömmliche Verfahren erfolgen, z.B. mit Heißluft, InfrarotStrahlung oder durch induktive Erwärmung des Metallbandes, wobei das Verbundmaterial mit der in diesem Schritt schmelzflüssigen, modifizierten Kunststoffschicht nicht mit Walzen in Berührung kommt (z.B. durch einen sogenannten Schwebetrockner, in dem das Band auf einem Luftpolster geführt wird).

Die Abkühlung und Abkühlungsgeschwindigkeit nach dem Wärmebehandlungsschritt unterliegen keinen besonderen Beschränkungen. Insbesondere können sie durch eine spezielle Vorrichtung erzwungen werden, so daß eine schnelle Abkühlung im Bereich von 100 bis 200°C/s oder mehr erreicht wird. Vorzugsweise erfolgt die Abkühlung allein durch die umgebende Atmosphäre ohne daß es einer weiteren Vorrichtung bedarf, und Abkühlungsgeschwindigkeiten von weniger als 100°C/s, z.B. weniger als 50°C/s, weniger als 30°C/s und weniger als 10°C/s, sind im allgemeinen ausreichend, um die erfindungsgemäßen Wirkungen des Verfahrens zu erreichen.

Bevorzugt weisen die modifizierten Kunststoffschichten unabhängig voneinander ein Flächengewicht von 3 bis 40 g/m² auf, besonders bevorzugt von 7 bis 10 g/m². Die modifizierten Kunststoffschichten bestehen bevorzugt aus einem Maleinsäureanhydrid-modifizierten Polypropylen. In diesem Fall beträgt die Temperatur im Wärmebehandlungsschritt etwa 180°C, abhängig vom Modifizierungsgrad des Polypropylens.

Die Dicke des Metallbandes beträgt bevorzugt 40 bis 200 µm, besonders bevorzugt 70 bis 150 µm, und am meisten bevorzugt 90 µm. Das Metallband kann oberflächenbehandelt sein, z.B. durch Chromatierung. Dies ist aber für eine gute Haftung der modifizierten Kunststoffschicht auf dem Metallband nicht zwingend erforderlich, und aus Kostengründen ist es bevorzugt, ein nicht oberflächenbehandeltes Metallband zu verwenden. Das Metallband besteht weiter bevorzugt aus Aluminium oder Aluminiumlegierung.

In einer bevorzugten Ausführungsform wird das Metallband im Beschichtungsschritt zusätzlich ein- oder beidseitig mit einer Kunststoffschicht auf Polypropylenbasis durch Coextrusion beschichtet. In dieser Ausführungsform dient die modifizierte Kunststoffschicht als Haftvermittler zwischen dem Metallband und der Kunststoffschicht, und das Flächengewicht der modifizierten Kunststoffschichten beträgt in diesem Fall unabhängig voneinander bevorzugt 3 bis 10 g/m², besonders bevorzugt 5 bis 7 g/m².

Das Flächengewicht der Kunststoffschichten beträgt in einer weiter bevorzugten Ausführungsform unabhängig voneinander 3-40 g/m² und besonders bevorzugt 7-10 g/m². Die Kunststoffschichten bestehen bevorzugt aus Polypropylen oder Polypropylen-Copolymer, z.B. Polypropylen/Polyethylen-Copolymer, oder Polypropylen/Polyethylen-Mischungen. Ein Beispiel ist eine Mischung aus Polypropylen mit 5-30 Gew.-% LDPE. Zusätzlich können die Kunststoffschichten unabhängig voneinander ein oder mehrere Gleit- oder Schmiermittel enthalten, z.B. Ölsäureamid oder Erucasäureamid, die eine Verformung des Metallverbundmaterials durch Tiefziehen ohne weitere Schmierung des Materials oder der Werkzeuge ermöglichen. Falls erwünscht, kann eine der Kunststoffschichten abziehfähig ausgestaltet sein.

Die Kunststoff- und modifizierten Kunststoffschichten können gegebenenfalls eingefärbt sein, z.B. mit Farbstoffen oder Pigmenten, wobei es bei Einsatz einer Kombination aus modifizierter Kunststoffschicht und Kunststoffschicht besonders bevorzugt ist, die jeweils aufeinanderliegende Kunststoff- und modifizierte Kunststoffschicht gleich einzufärben. Dies hat den Vorteil, daß Schichtdickenschwankungen der einzelnen Kunststoff- bzw. modifizierten Kunststoffschicht nicht zu einer Veränderung des Farbtons führen, solange die Gesamtschichtdicke konstant bleibt. Ferner werden Farbunregelmäßigkeiten und Schlierenbildung ausgeglichen, wie sie bei Verwendung von Copolymeren und Kompounds aus verschiedenen Polypropylensorten und Polypropylen/Polyethylen-Mischungen durch die unterschiedliche Löslichkeit bzw. Mischbarkeit der Farbstoffe oder Pigmente auftreten können.

Das Metallverbundmaterial, das durch das erfindungsgemäße Verfahren herstellbar ist, kann aufgrund der guten Haftungseigenschaften der Beschichtung auf dem Metallband zur Herstellung von sterilisierbaren Hohlkörpern, insbesondere Behältern, verwendet werden.

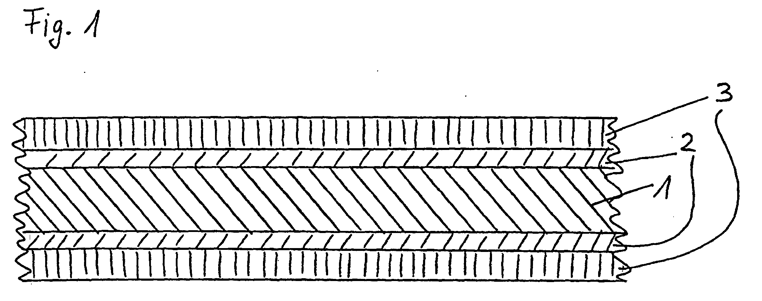

Fig. 1 zeigt einen Schnitt durch eine bevorzugte Ausführungsform des durch das erfindungsgemäße Verfahren herstellbaren Metallverbundmaterials. Darin umfaßt das Metallverbundmaterial ein Metallband 1 und die durch Coextrusion aufgebrachten modifizierten Kunststoffschichten 2 und Kunststoffschichten 3.

Das erfindungsgemäße Verfahren hat gegenüber den bekannten Verfahren neben den ausgezeichneten Haftungseigenschaften zwischen Metallband und Beschichtung die Vorteile, daß nur ein Arbeitsgang, d.h. die Extrusion bzw. Coextrusion, und kein Einsatz von Lösungsmitteln wie bei Kaschierverfahren erforderlich ist. Auch ist eine Vorbehandlung der Oberfläche des Metallbandes, z.B. durch Chromatierung wie bei einbrennlackierten Bändern, nicht notwendig. Somit ergeben sich deutlich reduzierte Herstellungskosten bei gleichen oder verbesserten Haftungseigenschaften zwischen den einzelnen Schichten des Metallverbundmaterials. Schließlich ist es möglich, ein leicht recycle-fähiges Metallverbundmaterial aus nur zwei Komponenten herzustellen, z.B. Aluminium und modifiziertem Polypropylen.

## Patentansprüche

1. Verfahren zur Herstellung eines tiefzieh- und sterilisierbaren Metallverbundmaterials, **dadurch gekennzeichnet, daß** es die folgenden Schritte umfaßt:
(a) ein- oder beidseitiges Beschichten eines Metallbandes (1) mit einer modifizierten Kunststoffschicht (2) auf Basis von modifiziertem Polypropylen durch Extrusion, wobei die Extrusionsbeschichtung auf einem Metallband von Raumtemperatur erfolgt, so daß die Kunststoffschicht vorübergehend in den festen Zustand übergeht, und anschließend
(b) Erwärmen des resultierenden Metallverbundmaterials auf eine Temperatur oberhalb des Schmelzpunktes der modifizierten Kunststoffschicht (2) für eine Dauer von 1 bis 10 Sekunden, um die Kunststoffschicht erneut in den schmelzflüssigen Zustand zu überführen.

2. Verfahren gemäß Anspruch 1, **dadurch gekennzeichnet, daß** die modifizierten Kunststoffschichten (2) unabhängig voneinander ein Flächengewicht von 3 bis 40 g/m² aufweisen.

3. Verfahren gemäß Anspruch 1 oder 2, **dadurch gekennzeichnet, daß** die modifizierten Kunststoffschichten (2) aus Maleinsäureanhydrid-modifiziertem Polypropylen bestehen.

4. Verfahren gemäß einem der vorhergehenden Ansprüche, **dadurch gekennzeichnet, daß** das Metallband eine Dicke von 40 bis 200 µm aufweist.

5. Verfahren gemäß einem der vorhergehenden Ansprüche, **dadurch gekennzeichnet, daß** als Metallband (1) ein nicht oberflächenbehandeltes Metallband verwendet wird.

6. Verfahren gemäß einem der vorhergehenden Ansprüche, **dadurch gekennzeichnet, daß** das Metallband (1) im Schritt (a) zusätzlich ein- oder beidseitig mit einer Kunststoffschicht (3) auf Polypropylenbasis durch Coextrusion beschichtet wird, wobei die modifizierte Kunststoffschicht (2) als Haftvermittler dient.

7. Verfahren gemäß Anspruch 6, **dadurch gekennzeichnet, daß** die modifizierten Kunststoffschichten (3) unabhängig voneinander ein Flächengewicht von 3 bis 10 g/m² aufweisen.

8. Verfahren gemäß Anspruch 6 oder 7, **dadurch gekennzeichnet, daß** die Kunststoffschichten (3) unabhängig voneinander ein Flächengewicht von 3 bis 40 g/m² aufweisen.

9. Verfahren gemäß einem der Ansprüche 6 bis 8, **dadurch gekennzeichnet, daß** die Kunststoffschichten (3) unabhängig voneinander aus Polypropylen oder Polypropylen-Copolymer bestehen.

10. Verfahren gemäß einem der Ansprüche 6 bis 9, **dadurch gekennzeichnet, daß** die Kunststoffschichten (3) unabhängig voneinander zusätzlich ein oder mehrere Gleit- oder Schmiermittel enthalten.

11. Verfahren gemäß einem der Ansprüche 6 bis 10, **dadurch gekennzeichnet, daß** die modifizierten Kunststoffschichten (2) und die Kunststoffschichten (3) auf einer oder beiden Seiten des Metallbandes jeweils gleichfarbig eingefärbt sind.

12. Verwendung des nach einem der Ansprüche 1 bis 11 herstellbaren Metallverbundmaterials zur Herstellung von Hohlkörpern durch ein Tiefzieh- oder Abstreckziehverfahren.

## Claims

1. Process for the production of a deep-drawable and sterilisable metallic composite material, **characterised in that** it includes the following steps:
(a) coating of a metal strip (1) on one or both sides with a modified plastics layer (2) based on modified polypropylene by extrusion, wherein the extrusion coating takes place on a metal strip of room temperature, such that the plastics layer passes temporarily into the solid state, followed by
(b) heating of the resulting metallic composite material to a temperature above the melting point of the modified plastics layer (2) for a duration of from 1 to 10 seconds in order to convert the plastics layer again into the melted state.

2. Process according to Claim 1, **characterised in that**, independently of one another, the modified plastics layers (2) have a weight per unit area of from 3 to 40 g/m².

3. Process according to Claim 1 or 2, **characterised in that** the modified plastics layers (2) consist of maleic anhydride-modified polypropylene.

4. Process according to one of the preceding claims, **characterised in that** the metal strip has a thickness of from 40 to 200 µm.

5. Process according to one of the preceding claims, **characterised in that** a non-surface-treated metal strip is used as the metal strip (1).

6. Process according to one of the preceding claims, **characterised in that** the metal strip (1) is coated additionally in step (a) on one or both sides with a plastics layer (3) based on polypropylene by coextrusion, wherein the modified plastics layer (2) serves as a bonding agent.

7. Process according to Claim 6, **characterised in that**, independently of one another, the modified plastics layers (3) have a weight per unit area of from 3 to 10 g/m².

8. Process according to Claim 6 or 7, **characterised in that**, independently of one another, the plastics layers (3) have a weight per unit area of from 3 to 40 g/m².

9. Process according to one of Claims 6 to 8, **characterised in that**, independently of one another, the plastics layers (3) consist of polypropylene or polypropylene copolymer.

10. Process according to one of Claims 6 to 9, **characterised in that**, independently of one another, the plastics layers (3) contain additionally one or more slip agents or lubricants.

11. Process according to one of Claims 6 to 10, **characterised in that** the modified plastics layers (2) and the plastics layers (3) on one or both sides of the metal strip are in each case coloured the same colour.

12. Use of the metallic composite material producible in accordance with one of Claims 1 to 11 for the production of hollow bodies by a deep-draw or ironing process.

## Revendications

1. Procédé de fabrication d'un matériau composite métallique pouvant être embouti et stérilisé, **caractérisé en ce qu'**il comprend les étapes suivantes :
(a) revêtement sur une ou deux faces d'une bande métallique (1), avec une couche plastique modifiée (2) à base de polypropylène modifié, par extrusion, où le revêtement d'extrusion est réalisé sur une bande métallique à la température ambiante, de sorte que la couche plastique passe temporairement à l'état solide, et ensuite,
(b) chauffage du matériau composite métallique résultant jusqu'à une température supérieure au point de fusion de la couche plastique modifiée (2) pendant une durée allant de 1 à 10 secondes, pour à nouveau faire passer la couche plastique à l'état fondu.

2. Procédé selon la revendication 1, **caractérisé en ce que** les couches plastiques modifiées (2) présentent, indépendamment l'une de l'autre, un poids surfacique allant de 3 à 40 g/m².

3. Procédé selon la revendication 1 ou 2, **caractérisé en ce que** les couches plastiques modifiées (2) consistent en du polypropylène modifié par l'anhydride maléique.

4. Procédé selon l'une quelconque des revendications précédentes, **caractérisé en ce que** la bande métallique présente une épaisseur allant de 40 à 200 µm.

5. Procédé selon l'une quelconque des revendications précédentes, **caractérisé en ce que** l'on utilise comme bande métallique (1) une bande métallique non traitée en surface.

6. Procédé selon l'une quelconque des revendications précédentes, **caractérisé en ce que** la bande métallique (1) est en outre revêtue dans l'étape (a), sur une ou deux faces, d'une couche plastique (3) à base de polypropylène par coextrusion, où la couche plastique modifiée (2) sert d'auxiliaire d'adhésion.

7. Procédé selon la revendication 6, **caractérisé en ce que** les couches plastiques modifiées (3) présentent, indépendamment l'une de l'autre, un poids surfacique allant de 3 à 10 g/m².

8. Procédé selon la revendication 6 ou 7, **caractérisé en ce que** les couches plastiques (3) présentent, indépendamment l'une de l'autre, un poids surfacique allant de 3 à 40 g/m².

9. Procédé selon l'une quelconque des revendications 6 à 8, **caractérisé en ce que** les couches plastiques (3) consistent, indépendamment l'une de l'autre, en du polypropylène ou un copolymère de polypropylène.

10. Procédé selon l'une quelconque des revendications 6 à 9, **caractérisé en ce que** les couches plastiques (3) contiennent indépendamment l'une de l'autre, en outre, un ou plusieurs lubrifiants internes ou lubrifiants.

11. Procédé selon l'une quelconque des revendications 6 à 10, **caractérisé en ce que** les couches plastiques modifiées (2) et les couches plastiques (3) sont colorées sur une ou les deux faces de la bande métallique, chaque fois de la même couleur.

12. Utilisation du matériau composite métallique pouvant être préparé selon une des revendications 1 à 11, pour la préparation de corps creux par un procédé d'emboutissage ou d'étirage.
